# EUROPEAN PATENT APPLICATION

(11) **EP 4 477 703 A1**
(43) Date of publication of application: **18.12.2024**
(21) Application number: 24178676.3
(22) Date of filing: 29.05.2024
(51) Int. Cl.: C08L 1/02, C08L 1/12, C08L 67/04

(54) **RESIN COMPOSITION**

(30) Priority: 13.06.2023 JP 2023097313; 26.03.2024 JP 2024049634
(71) Applicant: FUJIFILM Business Innovation Corp., Minato-ku Tokyo (JP)
(72) Inventor: NISHIOKA, Sachiko, Minamiashigara-shi, Kanagawa (JP); YAO, Kenji, Minamiashigara-shi, Kanagawa (JP); TAKAGI, Shimpei, Minamiashigara-shi, Kanagawa (JP)
(74) Representative: Kurig, Thomas

(57) **Abstract**

A resin composition includes a biodegradable resin, and a cellulose structure including at least one of a cellulose or a cellulose derivative as a main component, in which the cellulose structure is present with an average diameter of 50 µm or less in the biodegradable resin.

## Description

### BACKGROUND OF THE INVENTION

### (i) Field of the Invention

The present invention relates to a resin composition.

### (ii) Description of Related Art

JP2008-8158A proposes "a polylactic acid-based or aliphatic polyester resin-based resin composition, in which a nucleating agent consists of crystalline polysaccharides, a particle diameter of the nucleating agent is 500 µm or less, the nucleating agent consists of chitin, chitosan, or crab shells, and a content of a nucleating agent (b) is in a range of 0.1 to 10 parts by weight with respect to 100 parts by weight of a polylactic acid-based or aliphatic polyester resin-based resin (a)".

JP2022-21326A proposes "a biodegradation accelerator including polysaccharides and/or monosaccharides, in which a content of xylulose in the biodegradation accelerator is 15% by mass or more; and a biodegradable resin composition including 1 part by mass or more and 250 parts by mass or less of the biodegradation accelerator with respect to 100 parts by mass of a biodegradable resin".

JP1999-241009A proposes "a resin composition consisting of a polymer component (A) containing a polylactic acid (a1) and an aliphatic polyester (a2) with a melting point of 50°C to 250°C, having biodegradability, in which the resin composition is a polylactic acid-based resin composition containing the polylactic acid (a1) in an amount of 90% to 50% by weight and the aliphatic polyester (a2) in an amount of 10% to 50% by weight, each with respect to a total weight of the polylactic acid (a1) and the aliphatic polyester (a2), and containing a natural substance (B) having biodegradability in an amount of 0.1 to 100 parts by weight with respect to 100 parts by weight of the polymer component (A)".

### SUMMARY OF THE INVENTION

An object of the present invention is to provide a resin composition including a biodegradable resin and a cellulose structure including at least one of a cellulose or a cellulose derivative as a main component, in which the resin composition makes it possible to obtain a resin molded body having excellent biodegradability and heat resistance, as compared with a case where the cellulose structure is present with an average diameter of more than 50 µm in the biodegradable resin.

Means for addressing the problems include the following aspects.
<1>
   According to a first aspect of the present disclosure, there is provided a resin composition including: a biodegradable resin; and a cellulose structure including at least one of a cellulose or a cellulose derivative as a main component, in which the cellulose structure is present with an average diameter of 50 µm or less in the biodegradable resin.
<2>
   According to a second aspect of the present disclosure, there is provided the resin composition according to <1>, in which the cellulose structure may be a porous cellulose structure.
<3>
   According to a third aspect of the present disclosure, there is provided the resin composition according to <1> or <2>, in which a number-average molecular weight of the cellulose and the cellulose derivative may be 15,000 or more and 50,000 or less.
<4>
   According to a fourth aspect of the present disclosure, there is provided the resin composition according to any one of <1> to <3>, in which the cellulose derivative may be cellulose acetate.
<5>
   According to a fifth aspect of the present disclosure, there is provided the resin composition according to any one of <1> to <4>, in which a content of the cellulose structure with respect to the biodegradable resin may be 0.1% by mass or more and 10% by mass or less.
<6>
   According to a sixth aspect of the present disclosure, there is provided the resin composition according to any one of <1> to <5>, in which a heat deflection temperature (HDT) may be 140°C or higher.
<7>
   According to a seventh aspect of the present disclosure, there is provided the resin composition according to any one of <1> to <6>, in which a biodegradation rate measured by a method according to ISO 14855-1: 2012 may be 30% or more in 28 days.
<8>
   According to an eighth aspect of the present disclosure, there is provided the resin composition according to any one of <1> to <7>, in which the biodegradable resin is at least one selected from the group consisting of polylactic acid, polybutylene succinate, polybutylene succinate adipate, cellulose acetate, and cellulose acetate propionate.

According to <1>, <6>, <7>, or <8>, there is provided a resin composition including a biodegradable resin and a cellulose structure including at least one of a cellulose or a cellulose derivative as a main component, in which the resin composition makes it possible to obtain a resin molded body having excellent biodegradability and heat resistance, as compared with a case where the cellulose structure is present with an average diameter of more than 50 µm in the biodegradable resin.

According to <2>, there is provided a resin composition, which makes it possible to obtain a resin molded body having excellent biodegradability and heat resistance, as compared with a case where the cellulose structure is a non-porous cellulose structure.

According to <3>, there is provided a resin composition, which makes it possible to obtain a resin molded body having excellent biodegradability and heat resistance, as compared with a case where the cellulose and the cellulose derivative have a number-average molecular weight of less than 15,000 or more than 50,000.

According to <4>, there is provided a resin composition, which makes it possible to obtain a resin molded body having excellent biodegradability and heat resistance, as compared with a case where the cellulose derivative is cellulose acetate propionate.

According to <5>, there is provided the resin composition, which makes it possible to obtain a resin molded body having excellent biodegradability and heat resistance, as compared with a case where a content of the cellulose structure with respect to the biodegradable resin is less than 0.1% by mass or more than 10% by mass.

### DETAILED DESCRIPTION OF THE INVENTION

Hereinafter, exemplary embodiments that are examples of the present invention will be described. The following descriptions and examples merely illustrate the exemplary embodiments, and do not limit the scope of the invention.

With regard to a numerical range described stepwise in the present specification, the upper limit value or the lower limit value of a numerical range may be replaced with the upper limit value or the lower limit value of another numerical range described stepwise. In addition, in a numerical range described in the present specification, an upper limit value or a lower limit value described in the numerical range may be replaced with a value shown in Examples.

Each component may include a plurality of corresponding substances.

In a case where the amount of each component in a composition is mentioned and plural kinds of substances corresponding to each component are present in the composition, the amount means a total amount of the plural kinds of substances present in the composition unless otherwise specified.

### <Resin Composition>

A resin composition according to the present exemplary embodiment includes:
a biodegradable resin, and
a cellulose structure including at least one of a cellulose or a cellulose derivative as a main component,
in which the cellulose structure is present with an average diameter of 50 µm or less in the biodegradable resin.

Furthermore, the cellulose structure is, for example, a powder including at least one of a cellulose or a cellulose derivative as a main component.

With the configuration, the resin composition according to the present exemplary embodiment makes it possible to obtain a resin molded body having excellent biodegradability and heat resistance. A reason thereof is presumed as follows.

In recent years, there has been an increasing interest in biodegradable resins from environmental awareness typified by Sustainable Development Goals (SDGs). In particular, among the biodegradable resins, a polylactic acid is a resin having high carbon-neutral biodegradability, and is expected to be used as an alternative to petroleum-derived plastics. However, the biodegradable resin, in particular, the polylactic acid has low heat resistance and is limited in application.

In a case where a petroleum-based resin and a modifier are compounded with the biodegradable resin, the heat resistance can be improved. However, in this case, the biomass degree is reduced, and thus, the environmental effects such as a reduction in CO₂ emission and saving of petroleum resource are decreased. Not only that, the biodegradability is further impaired.

Therefore, in the resin composition according to the present exemplary embodiment, the cellulose structure is finely present with an average diameter of 50 µm or less in the biodegradable resin.

By incorporating the highly biodegradable cellulose structure into the biodegradable resin, the biodegradation rate of the entire resin composition is improved. It is considered that since the biodegradation of the cellulose structure precedes, and the decomposition enzymes and the microorganisms are concentrated in the entire biodegradable resin, the biodegradation rate of the biodegradable resin is increased.

In addition, it is considered that the cellulose structure which is finely present in the biodegradable resin functions as a crystal nucleating agent in the biodegradable resin, accelerates the crystallization of the biodegradable resin, and thus improves the heat resistance.

From the above, it is presumed that the resin composition according to the present exemplary embodiment makes it possible to obtain a resin molded body having excellent biodegradability and heat resistance.

Hereinafter, the details of the resin composition according to the present exemplary embodiment will be described.

### (Biodegradable Resin)

The biodegradable resin is a resin that is decomposed into water and carbon dioxide by a microorganism. Specifically, in the present exemplary embodiment, the biodegradable resin means a resin having an aerobic-condition biodegradation rate of 5% or more in 28 days by the method according to ISO 14855-1: 2012.

Examples of the biodegradable resin include a polyester resin, a natural polymer, and a polyvinyl alcohol.

Examples of the polyester resin include an aliphatic polyester resin and an aliphatic aromatic polyester resin.

Examples of the aliphatic polyester resin include polyhydroxyalkanoic acids such as polylactic acid (PLA), polyglycolic acid (PGA), polyhydroxyalkanoate (PHA), polycaprolactone, polybutylene succinate (PBS), polybutylene succinate/adipate (PBSA), and polyethylene succinate (PBA).

Examples of the aliphatic aromatic polyester resin include a polybutylene adipate/terephthalate copolymer resin (PBAT) and a polytetramethylene adipate/terephthalate copolymer resin.

Examples of the natural polymer include starch, cellulose, chitin, chitosan, gluten, gelatin, zein, soybean protein, collagen, and keratin.

Examples of the biodegradable resin also include cellulose derivatives (cellulose acylate, cellulose ether, hydroxyalkyl cellulose, and carboxymethyl cellulose).

Furthermore, examples of the cellulose acylate include cellulose acetate (cellulose monoacetate, cellulose diacetate (DAC), or cellulose triacetate), cellulose acetate propionate (CAP), and cellulose acetate butyrate (CAB).

Among these biodegradable resins, from the viewpoint of environmental suitability, examples of the biodegradable resin include at least one selected from the group consisting of polylactic acid, polyethylene succinate, polybutylene succinate adipate, poly(3-hydroxybutyrate-co-3 -hydroxypentanoate), poly(3 -hydroxybutyrate-co-3 -hydroxyhexanoate), cellulose acetate, and cellulose acetate propionate, and in particular, a resin (in particular, a polylactic acid) corresponding to both the biomass resin and the biodegradable resin is preferable.

Each of these biodegradable resins may be used alone or in combination of two or more kinds thereof.

A content of the biodegradable resin is, for example, preferably 50% by mass or more and 99.9% by mass or less, and more preferably 90% by mass or more and 99.9% by mass or less with respect to the resin composition.

### (Cellulose Structure)

The cellulose structure includes at least one of a cellulose or a cellulose derivative as a main component.

Here, the expression "including at least one of a cellulose or a cellulose derivative as a main component" means that a total content of the cellulose and the cellulose derivative with respect to the cellulose structure is 90% by mass or more, and is, for example, preferably 95% by mass or more, 98% by mass or more, or 100% by mass.

The cellulose is a polymer compound in which a large number of β-glucose molecules are linearly polymerized by a glycosidic bond.

On the other hand, examples of the cellulose derivative include cellulose acylate, cellulose ether, hydroxyalkyl cellulose, and carboxymethyl cellulose.

Among these, from the viewpoint of high biodegradability, for example, the cellulose acylate is preferable as the cellulose derivative.

The cellulose acylate is a cellulose derivative in which at least a part of hydroxy groups in a cellulose is substituted with an acyl group (acylated). The acyl group is a group having a structure of -CO-R^{AC} (in which R^{AC} represents a hydrogen atom or a hydrocarbon group).

The cellulose acylate is, for example, a cellulose derivative represented by General Formula (CA).

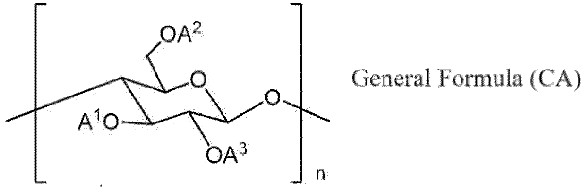

In General Formula (CA), A¹, A², and A³ each independently represent a hydrogen atom or an acyl group, and n represents an integer of 2 or more. It should be noted that at least some of n pieces of A¹'s, n pieces of A²'s, or n pieces of A³'s each represent an acyl group. The n pieces of A¹'s in the molecule may be all or partially the same as or different from each other. Similarly, n pieces of A²'s and n pieces of A³'s in the molecule may be all or partially the same as or different from each other.

In the acyl group represented by each of A¹, A², and A³, a hydrocarbon group in the acyl group may be linear, branched, or cyclic, but is, for example, preferably linear or branched, and more preferably linear.

As the acyl group represented by each of A¹, A², and A³, the hydrocarbon group in the acyl group may be a saturated hydrocarbon group or an unsaturated hydrocarbon group, but is, for example, more preferably the saturated hydrocarbon group.

The acyl group represented by each of A¹, A², and A³ is preferably, for example, an acyl group having 1 or more and 6 or less carbon atoms. That is, as the cellulose acylate, for example, cellulose acylate having an acyl group having 1 or more and 6 or less carbon atoms is preferable.

The acyl group represented by each of A¹, A², and A³ may be a group in which a hydrogen atom in the acyl group is substituted with a halogen atom (for example, a fluorine atom, a bromine atom, and an iodine atom), an oxygen atom, or a nitrogen atom, but is preferably, for example, not substituted.

Examples of the acyl group represented by each of A¹, A², and A³ include a formyl group, an acetyl group, a propionyl group, a butyryl group (butanoyl group), a propenoyl group, and a hexanoyl group. Among these, as the acyl group, for example, an acyl group having 2 or more and 4 or less carbon atoms is more preferable, and an acyl group having 2 or 3 carbon atoms is still more preferable from a viewpoint of improving the biodegradation rate of the resin particles.

Examples of the cellulose acylate include cellulose acetate (cellulose monoacetate, cellulose diacetate (DAC), or cellulose triacetate), cellulose acetate propionate (CAP), and cellulose acetate butyrate (CAB).

From the viewpoint of high biodegradability, the cellulose acylate is preferably, for example, cellulose acetate.

From the viewpoint of biodegradability, a substitution degree of the cellulose acylate is, for example, preferably 1.7 or more and 2.9 or less, more preferably 1.9 or more and 2.6 or less, still more preferably 2.0 or more and 2.5 or less, and particularly preferably 2.1 or more and 2.4 or less.

The substitution degree of cellulose acylate is an index indicating a degree to which a hydroxy group of cellulose is substituted with an acyl group. That is, the substitution degree is an index indicating a degree of acylation of cellulose acylate. Specifically, the substitution degree means an intramolecular average number of substitutions in which three hydroxy groups in a D-glucopyranose unit of cellulose acylate are substituted with acyl groups. The substitution degree is determined from an integral ratio of peaks of cellulose-derived hydrogen and acyl group-derived hydrogen by ¹H-NMR (JMN-ECA/manufactured by JEOL RESONANCE Inc.).

These cellulose derivatives may be used alone or in combination of two or more kinds thereof.

### - Number-Average Molecular Weight of Cellulose and Cellulose Derivative -

The number-average molecular weight of the cellulose and the cellulose derivative is, for example, preferably 5,000 or more and 50,000 or less, more preferably 10,000 or more and 50,000 or less, and still more preferably 15,000 or more and 30,000 or less.

In a case where the number-average molecular weight of the cellulose and the cellulose derivative is 150,000 or more, the cellulose structure is suppressed from being finely pulverized before kneading with the resin. As a result, secondary aggregation after the pulverization is suppressed, and fine and substantially uniform dispersion in the resin is easily realized, and the biodegradability and the heat resistance of the resin molded body are easily improved.

In a case where the number-average molecular weight of the cellulose and the cellulose derivative is 50,000 or less, the biodegradability is suppressed.

The number-average molecular weight of the cellulose and the cellulose derivative is measured by a gel permeation chromatography method (differential refractive index meter: Optilab T-rEX, manufactured by Wyatt Technology Corporation, multi-angle light scattering detector: DAWN HELEOS II, manufactured by Wyatt Technology Corporation, each one of TSKgel α-M column and α-3000 column, manufactured by Tosoh Corporation) using dimethylacetamide (added with 0.1 M lithium chloride) as a solvent.

The cellulose structure may include other components.

### (Characteristics of Cellulose Structure)

### - Average Diameter of Cellulose Structure in Biodegradable Resin -

The cellulose structure is present with an average diameter of 50 µm or less in the biodegradable resin, and is present, for example, more preferably with an average diameter of 5 µm or less, and still more preferably with an average diameter of 1 µm or less.

In a case where the cellulose structure is present with an average diameter of 50 µm or less in the biodegradable resin, the cellulose structure is finely dispersed in the resin, and the biodegradability and the heat resistance of the resin composition are improved.

Furthermore, from the viewpoint of sufficiently exhibiting the reforming capability of the cellulose resin, and improving the biodegradability and the heat resistance of the resin composition, it is preferable that the cellulose structure is present, for example, with an average diameter of 0.05 µm or more in the biodegradable resin.

The average diameter of the cellulose structure in the biodegradable resin is measured as follows.

The resin composition is cut. The cellulose structure on a cut surface of the resin composition is observed with a scanning electron microscope (SEM) at a magnification of 1,000 times to obtain an SEM image. The SEM image is incorporated into image processing software "ImageJ" to determine an equivalent circle diameter from the area of the cellulose structure. Then, the average value of the equivalent circle diameters of the 20 cellulose structures is determined and used as an average diameter.

### - Porous Structure -

The cellulose structure may be a porous structure or a non-porous structure.

It should be noted that in a case where a porous cellulose structure is applied, the contact area with the biodegradable resin increases, and thus the biodegradability is easily improved. In addition, the reforming capability is also improved and the heat resistance is also easily improved.

### - Specific Surface Area -

The specific surface area of the cellulose structure is, for example, preferably 1 m²/g or more and 150 m²/g or less, more preferably 10 m²/g or more and 150 m²/g or less, and still more preferably 20 m²/g or more and 100 m²/g or less.

In a case where the specific surface area of the cellulose structure is 0.1 m²/g or more, the reforming capability of the cellulose structure is sufficient and the heat resistance is improved.

In a case where the specific surface area of the cellulose structure is 150 m²/g or less, the cellulose structure is suppressed from being collapsed before kneading with the resin. As a result, secondary aggregation after the collapse is suppressed, fine and substantially uniform dispersion in the resin is realized, and the biodegradability and the heat resistance of the resin molded body are improved.

The specific surface area of the cellulose structure is a BET specific surface area, and is a value measured by automatic measurement of a multipoint method using a specific surface area/pore distribution measuring device (BELSORP MAX II, Microtrac Retsch GmbH). The measurement temperature is set to 77 K and a nitrogen gas is used as the adsorbing gas.

It should be noted that before the measurement, a sample (that is, the cellulose structure) is subjected to vacuum drying at 100°C for 24 hours as a pretreatment, and water adsorbed in the pores of the sample is removed.

### - Void Ratio -

The void ratio of the cellulose structure is, for example, preferably 10% or more and 50% or less, more preferably 15% or more and 50% or less, and still more preferably 20% or more and 50% or less.

In a case where the void ratio of the cellulose structure is 20% or more, the reforming capability of the cellulose structure is sufficient and the heat resistance is improved.

In a case where the void ratio of the cellulose structure is 50% or less, the cellulose structure is suppressed from being collapsed before kneading with the resin. As a result, secondary aggregation after the collapse is suppressed, fine and substantially uniform dispersion in the resin is realized, and the biodegradability and the heat resistance of the resin molded body are improved.

The void ratio of the cellulose structure is measured as follows.

The cellulose structure is observed with a scanning electron microscope (SEM) at a magnification of 25,000 times to obtain an SEM image. The SEM image is incorporated into image processing software "ImageJ" and subjected to a binarization processing to determine an area of the entire cellulose structure and an area of the voids. Then, a proportion of the voids of the cellulose structure to the area of the entire cellulose structure is determined, and the void ratio of the cellulose structure is determined.

This operation is performed 10 times to determine an average value.

### - Specific Gravity -

A specific gravity of the cellulose structure is, for example, preferably 0.5 g/cm³ or more and 1.15 g/cm³ or less, more preferably 0.6 g/cm³ or more and 1 g/cm³ or less, and still more preferably 0.7 g/cm³ or more and 0.9 g/cm³ or less.

In a case where the specific gravity of the cellulose structure is within the range, fine and substantially uniform dispersion in the resin is easily realized at the time of kneading the cellulose structure into the resin, and the biodegradability and the heat resistance of the resin molded body are improved.

A method for measuring the specific gravity of the cellulose structure is as follows.

30 g of the structure is used as a sample and the specific gravity was measured three times by a water displacement method using an automatic densimeter (DSG-1, manufactured by Toyo Seiki Seisaku-sho, Ltd.), except that water is changed to ethanol as a measurement liquid, and an average value thereof is adopted as a measured value.

### (Method for Producing Cellulose Structure)

The cellulose structure according to the present exemplary embodiment is obtained, for example, by the following method.
(1) A cellulose derivative is added to a good solvent for the cellulose derivative, and then the mixture is heated to obtain a solution A in which the cellulose derivative is dissolved in the good solvent.
(2) A poor solvent for the cellulose derivative is added to the solution A to obtain a solution B.
(3) The solution B is rapidly cooled and subjected to phase separation to generate a gel-like substance of the cellulose derivative.
(4) The gel-like substance is washed and then dried to obtain a porous cellulose structure having the cellulose derivative as a main component.
(5) The obtained porous cellulose structure may be pulverized and sieved as necessary to remove coarse particles and aggregates. The pulverization method is not particularly limited, and is performed by, for example, a dry pulverization device such as a jet mill, a vibration mill, a ball mill, and a pin mill. The sieving method is performed by, for example, a known method such as a vibrating sieve and an air classifier.

Here, a porous cellulose structure having a cellulose, or a cellulose and a cellulose derivative as a main component is obtained, depending on the degree of saponification, by saponifying a gel-like substance (that is, by saponifying the cellulose derivative).

In addition, in order to obtain the non-porous cellulose structure, there are, for example, a method in which cellulose particles are obtained by a suspension emulsification method and a method in which a cellulose acetate (DAC) raw material is pulverized.

### (Content of Cellulose Structure)

A content of the cellulose structure is, for example, preferably 0.1% by mass or more and 20% by mass or less, more preferably 0.1% by mass or more and 10% by mass or less, and still more preferably 1% by mass or more and 5% by mass or less with respect to the biodegradable resin.

In a case where the content of the cellulose structure is within the range, a resin molded body having sufficient biodegradability and high heat resistance is easily obtained.

### (Other Components)

The resin composition according to the present exemplary embodiment may include other components.

Examples of the other components include a plasticizer, a flame retardant, a compatibilizer, a mold release agent, a light fastener, a weather resistant agent, a colorant, a pigment, a modifier, a drip inhibitor, an antistatic agent, a hydrolysis inhibitor, a filler, a reinforcing agent (glass fiber, carbon fiber, talc, clay, mica, glass flake, milled glass, glass beads, crystalline silica, alumina, silicon nitride, aluminum nitride, boron nitride, and the like), an acid acceptor (an oxide such as magnesium oxide or aluminum oxide; a metal hydroxide such as magnesium hydroxide, calcium hydroxide, aluminum hydroxide, and hydrotalcite; calcium carbonate; and talc), and a reactive trapping agent (for example, an epoxy compound, an acid anhydride compound, and a carbodiimide).

The content of the other components is, for example, preferably 0% by mass or more and 5% by mass or less with respect to the total amount of the resin composition. Here, "0% by mass" means that the other components are not included.

### (Characteristics of Resin Composition)

### - Heat deflection Temperature (HDT) -

A heat deflection temperature (HDT) of the resin composition according to the present exemplary embodiment is, for example, preferably 125°C or higher, more preferably 140°C or higher, and still more preferably 150°C or higher. It should be noted that from the viewpoint of moldability, the heat deflection temperature (HDT) is, for example, 200°C or lower.

In a case where the heat deflection temperature (HDT) is within the range, a resin molded body having sufficiently high heat resistance can be obtained.

### (Biodegradation Rate)

The biodegradation rate of the resin composition according to the present exemplary embodiment, measured by the method according to ISO 14855-1: 2012 JIS 14855-1, for 28 days is, for example, preferably 30% or more, more preferably 50% or more, and still more preferably 70% or more. It should be noted that from the viewpoint of shape retention, the biodegradation rate is, for example, 100% or less.

In a case where the biodegradation rate is within the range, a resin molded body having sufficiently high biodegradability is easily obtained.

Here, the heat deflection temperature (HDT) and the biodegradation rate are values measured by the methods described in "Examples" which will be described later.

### (Method for Producing Resin Composition)

Examples of a method for producing the resin composition according to the present exemplary embodiment include a method in which a raw material cellulose structure and a biodegradable resin are mixed, and the mixture is melt-kneaded. A means for the melt-kneading is not particularly limited, and examples thereof include a twin-screw extruder, a Henschel mixer, a Banbury mixer, a single-screw extruder, a multi-screw extruder, and a kneader.

Then, by controlling the kneading conditions, a resin composition including a raw material cellulose structure that is collapsed by kneading the raw material cellulose structure and the biodegradable resin (that is, the cellulose structure) can be obtained.

Here, as the raw material cellulose structure, for example, a structure having an average diameter of 1 µm or more and 500 µm or less (for example, preferably 1 µm or more and 355 µm or less, and more preferably 1 µm or more and 150 µm or less) may be applied.

In a case where the average diameter of the raw material cellulose structure is 1 µm or more, the porous cellulose structure is collapsed at the time of kneading the raw material cellulose structure with the resin, fine and substantially uniform dispersion in the resin is easily realized, and the biodegradability and the heat resistance of the resin molded body are improved.

In a case where the average diameter of the raw material cellulose structure is 500 µm or less, the porous cellulose structure is suppressed from being finely collapsed before kneading with the resin. As a result, secondary aggregation after the collapse is suppressed, fine and substantially uniform dispersion in the resin is easily realized, and the biodegradability and the heat resistance of the resin molded body are improved.

A method for measuring the average diameter of the raw material cellulose structure is as follows.

The porous cellulose structure is observed with a scanning electron microscope (SEM) at a magnification of 250 times to obtain an SEM image. The SEM image is incorporated into image processing software "ImageJ" to determine an equivalent circle diameter from the area of the porous cellulose structure. Then, the average value of the equivalent circle diameters of 20 porous cellulose structures is determined and used as an average diameter.

Furthermore, the configuration of the raw material cellulose structure is the same as the cellulose structure, except for the average diameter, and a description thereof will not be repeated.

### <Resin Molded Body>

The resin molded body according to the present exemplary embodiment includes the resin composition according to the present exemplary embodiment. That is, the resin molded body according to the present exemplary embodiment is configured to have the same composition as the resin composition according to the present exemplary embodiment.

From the viewpoint of a high degree of freedom in shape, examples of the molding method for the resin molded body according to the present exemplary embodiment include an injection molded body obtained by injection molding.

The injection molding for the resin molded body according to the present exemplary embodiment may be performed using, for example, a commercially available device such as NEX500 manufactured by Nissei Plastic Industrial Co., Ltd., NEX150 manufactured by Nissei Plastic Industrial Co., Ltd., NEX7000 manufactured by Nissei Plastic Industrial Co., Ltd., PNX40 manufactured by Nissei Plastic Industrial Co., Ltd., and SE50D manufactured by Sumitomo Heavy Industries, Ltd.

The resin molded body according to the present exemplary embodiment may be a resin molded body obtained by another molding method. As another molding method, for example, extrusion molding, blow molding, thermal press molding, calendar molding, coating molding, cast molding, dipping molding, vacuum molding, transfer molding, or the like may be applied.

Examples of the application of the resin molded body according to the present exemplary embodiment include a housing for electronic or electrical apparatuses or home electric appliances; various parts for electronic or electrical apparatuses or home electric appliances; an interior part for an automobile; a block assembly toy; a plastic model kit; a storage case for a CD-ROM or a DVD; tableware; a beverage bottle; a food tray; a wrapping material; a film; and a sheet.

### Examples

Hereinafter, Examples will be described below; however, the present invention is not limited to these Examples. Incidentally, in the following description, all "parts" and "%" are in terms of mass unless otherwise specified.

### <Manufacture of Cellulose Structure>

### (Cellulose Structure CS (1))

A solution A obtained by adding 5 parts by mass of cellulose acetate DAC (1) to 20 parts by mass of dimethylformamide is stirred in a container at 90°C for 1 hour. Cellulose acetate is dissolved in dimethylformamide in the solution A, 25 parts by mass of hexanol is slowly added to the solution A under stirring, and a solution B thus obtained is stirred for 1 hour. Thereafter, the solution B is rapidly cooled by dipping the container in ice water and a gel product of the cellulose structure is obtained by phase separation. The generated gel product is washed with 200 parts by mass of ethanol and vacuum-dried at 50°C for 24 hours to obtain a cellulose structure. Thereafter, the structure is pulverized with a mill mixer, and sieving with a 106 µm sieve is carried out to obtain a finely pulverized cellulose structure.

### (Cellulose Structure CS (2))

A cellulose structure CS (2) is obtained in the same manner as for the cellulose structure CS (1), except that the mesh diameter of the sieve is 38 µm.

### (Cellulose Structure CS (3))

A cellulose structure CS (3) is obtained in the same manner as for the cellulose structure CS (1), except that the amount of cellulose acetate is set to 7.5 parts by mass.

### (Cellulose Structure CS (4))

A cellulose structure CS (4) is obtained in the same manner as for the cellulose structure CS (1), except that the amount of cellulose acetate is set to 3.5 parts by mass.

### (Cellulose Structure CS (5))

A cellulose structure CS (5) is obtained in the same manner as for the cellulose structure CS (1), except that the cellulose acetate DAC (1) is changed to DAC (2).

### (Cellulose Structure CS (6))

A cellulose structure CS (6) is obtained in the same manner as for the cellulose structure CS (1), except that cellulose acetate DAC (1) is changed to DAC (3).

### (Cellulose Structure CS (7))

A cellulose structure CS (7) is obtained in the same manner as for the cellulose structure CS (1), except that cellulose acetate DAC (1) is changed to DAC (4).

### (Cellulose Structure CS (8))

A cellulose structure CS (8) is obtained in the same manner as for the cellulose structure CS (1), except that cellulose acetate is changed to triacetyl cellulose.

### (Cellulose Structure CS (9))

A cellulose structure CS (9) is obtained in the same manner as for the cellulose structure CS (1), except that cellulose acetate is changed to cellulose acetate propionate.

### (Cellulose Structure CS (10))

A cellulose structure CS (10) is obtained in the same manner as for the cellulose structure CS (1), except that cellulose acetate is changed to cellulose acetate butyrate.

### (Cellulose Structure CS (11))

A cellulose structure CS (11) is obtained in the same manner as for the cellulose structure CS (1), except that the gel product is saponified with an alkali before washing with ethanol.

### (Cellulose Structure CS (12))

A cellulose structure CS (12) is obtained in the same manner as for the cellulose structure CS (1), except that the mesh diameter of the mesh screen is set to 212 µm.

### (Cellulose Structure CS (13))

A cellulose structure CS (13) is obtained in the same manner as for the cellulose structure CS (1), except that the amount of cellulose acetate is set to 10.0 parts by mass.

### (Cellulose Structure CS (14))

A cellulose structure CS (14) is obtained in the same manner as for the cellulose structure CS (1), except that the amount of cellulose acetate is set to 12.5 parts by mass.

### (Cellulose Structure CS (15))

A cellulose structure CS (15) is obtained in the same manner as for the cellulose structure CS (1), except that the amount of dimethylformamide is changed to 120 parts by mass and hexanol is changed to 370 parts by mass.

### (Cellulose Structure CS (16))

A cellulose structure CS (16) is obtained in the same manner as for the cellulose structure CS (1), except that cellulose acetate DAC (1) is changed to DAC (5).

### (Cellulose Structure CS (17))

A cellulose structure CS (17) is obtained in the same manner as for the cellulose structure CS (1), except that the sieving after the pulverization is not carried out.

### (Cellulose Structure CS (C1))

Cellulose acetate DAC (1) is pulverized with a mill mixer and then sieved with a 106 µm sieve to obtain a cellulose structure (C1).

### (Cellulose Structure CS (C2))

130 parts by mass of cellulose acetate DAC (1) is dissolved in 870 parts by mass of ethyl acetate. This is added to a dispersion liquid obtained by dispersing 50 parts by mass of calcium carbonate in 500 parts by mass of pure water, and the mixture is stirred for 3 hours. This mixture is added to a dispersion liquid obtained by dispersing 4 parts by mass of carboxymethyl cellulose and 200 parts by mass of methyl ethyl ketone in 600 parts by mass of pure water, and the mixture is stirred with a high-speed emulsifier for 5 minutes. 10 g of sodium hydroxide is added thereto and the mixture is stirred at 80°C for 3 hours to remove ethyl acetate and methyl ethyl ketone. 10 g of dilute hydrochloric acid is added thereto and the residue is filtered to obtain non-porous cellulose particles.

### (Characteristics of Cellulose Structure)

The following characteristics of the obtained cellulose structure are measured according to the above-described method.
- Average diameter of cellulose structure
- Specific surface area of cellulose structure (denoted as "BET" in the table)
- Void ratio of cellulose structure
- Specific gravity of cellulose structure

### <Examples 1 to 25 and Comparative Examples 1 to 3>

Under the conditions of composition, a cylinder temperature, and a kneading torque shown in Table 1, each component is charged into a twin-screw extruder (manufactured by Shibaura Machine Co., Ltd., TEM58SS), and each component is kneaded, cooled, and cut to obtain a resin pellet (corresponding to a resin composition).

### <Evaluation>

### (Dispersion Diameter)

The average diameter (referred to as "Dispersion diameter" in the table) of the cellulose structure present in the biodegradable resin is measured according to the above-described method.

### (Biodegradation Rate)

The obtained resin pellet is pulverized with Lab Mill (manufactured by Dalton Corporation, LM-05) and then sieved with a 100 µm mesh to recover the passing fraction. For the recovered product, an aerobic biodegradation measurement is carried out by a method according to ISO 14855-1:2012, and the biodegradation rate after 28 days is determined.

### (Heat deflection Temperature (HDT))

Under the conditions of a cylinder temperature, a mold temperature, and a mold holding time shown in Table 1, the resin pellet of each Example is charged into an injection molding device (Nissei Plastic Industrial Co., Ltd., NEX500) to mold an ISO multi-purpose dumbbell test piece (test part: width 8 mm × thickness 4 mm × length 110 mm).

For the obtained test piece, a heat deflection temperature (HDT) measurement at a load of 0.45 MPa is measured in accordance with ISO 75-1:2020, using an HDT measuring device (HDT-3, manufactured by Toyo Seiki Seisaku-sho, Ltd.).

### <Materials Used>

Hereinafter, details of the materials used will be described.

### - Raw Materials for Additive -

· DAC (1): "Product name CA-398-3" manufactured by Eastman Chemical Company, cellulose diacetate, number-average molecular weight Mn = 15,000
· DAC (2): "Product name L20" manufactured by Daicel Corporation, cellulose diacetate, number-average molecular weight Mn = 15,000
· DAC (3): "Product name L50" manufactured by Daicel Corporation, cellulose diacetate, number-average molecular weight Mn = 50,000
· DAC (4): "Product name L70" manufactured by Daicel Corporation, cellulose diacetate, number-average molecular weight Mn = 75,000
· DAC (5): Cellulose diacetate synthesized in-house, number-average molecular weight Mn = 13,000
· TAC: "Product name LT-35", manufactured by Daicel Corporation, cellulose triacetate, number-average molecular weight Mn = 50,000
· CAP: "Product name CAP-482-20" manufactured by Eastman Chemical Company, cellulose acetate propionate, number-average molecular weight Mn = 72,000
· CAB: "Product name CAB-381-20" manufactured by Eastman Chemical Company, cellulose acetate butyrate, number-average molecular weight Mn = 85,000
· CNF: "Product name BiNFIS DRY, manufactured by Sugino Machine Limited, cellulose nanofiber

### - Biodegradable Resin -

· PLA: Polylactic acid (Ingeo 3001D, manufactured by NatureWorks LLC)
· PBS: Polybutylene succinate (Bio-PBS manufactured by PTT MCC Biochem Co., Ltd.)
· PBSA: Polybutylene succinate adipate (PTT MCC Biochem Bio-PBSA)
· CAP: Cellulose acetate propionate (manufactured by Eastman Chemical Company, CAP-482-20)

**[Table 1-1]**

| | Additive (cellulose structure and the like) | | | | | | | | Biodegradable resin | |
|---|---|---|---|---|---|---|---|---|---|---|
| | Type | Component | Mn | Average diameter (µm) | BET (m²/g) | Void ratio (%) | Specific gravity | Addition amount (parts by mass) | Type | Addition amount (parts by mass) |
| Example 1 | CS (1) | DAC (1) | 15,000 | 100 | 20 | 25 | 0.71 | 1 | PLA | 100 |
| Example 2 | CS (2) | DAC (1) | 15,000 | 50 | 50 | 25 | 0.72 | 1 | PLA | 100 |
| Example 3 | CS (3) | DAC (1) | 15,000 | 100 | 10 | 15 | 0.7 | 1 | PLA | 100 |
| Example 4 | CS (4) | DAC (1) | 15,000 | 100 | 31 | 45 | 0.68 | 1 | PLA | 100 |
| Example 5 | CS (5) | DAC (2) | 15,000 | 100 | 15 | 20 | 0.7 | 1 | PLA | 100 |
| Example 6 | CS (6) | DAC (3) | 50,000 | 100 | 10 | 10 | 0.79 | 1 | PLA | 100 |
| Example 7 | CS (7) | DAC (4) | 75,000 | 100 | 3 | 10 | 0.89 | 1 | PLA | 100 |
| Example 8 | CS (8) | TAC | 50,000 | 100 | 10 | 10 | 0.72 | 1 | PLA | 100 |
| Example 9 | CS (9) | CAP | 72,000 | 100 | 10 | 10 | 0.91 | 1 | PLA | 100 |
| Example 10 | CS (10) | CAB | 85,000 | 100 | 10 | 10 | 0.89 | 1 | PLA | 100 |
| Example 11 | CS (11) | cellulose DAC (2) + saponification | 15,000 | 100 | 15 | 25 | 0.71 | 1 | PLA | 100 |
| Example 12 | CS (2) | DAC (1) | 15,000 | 50 | 50 | 25 | 0.72 | 1 | PBS | 100 |
| Example 13 | CS (2) | DAC (1) | 15,000 | 50 | 50 | 25 | 0.72 | 1 | PBSA | 100 |
| Example 14 | CS (2) | DAC (1) | 15,000 | 50 | 50 | 25 | 0.72 | 1 | CAP | 100 |
| Example 15 | CS (12) | DAC (1) | 15,000 | 500 | 3 | 30 | 0.92 | 1 | PLA | 100 |
| Example 16 | CS (13) | DAC (1) | 15,000 | 100 | 1 | 10 | 0.85 | 1 | PLA | 100 |
| Example 17 | CS (14) | DAC (1) | 15,000 | 100 | 0.7 | 5 | 0.95 | 1 | PLA | 100 |
| Example 18 | CS (15) | DAC (1) | 15,000 | 0.2 | 150 | 15 | 0.73 | 1 | PLA | 100 |
| Example 19 | CS (16) | DAC (5) | 13,000 | 100 | 40 | 25 | 0.71 | 1 | PLA | 100 |
| Example 20 | CS (17) | DAC (1) | 15,000 | 650 | 8 | 20 | 0.77 | 1 | PLA | 100 |
| Example 21 | CS (1) | DAC (1) | 15,000 | 100 | 20 | 25 | 0.71 | 0.1 | PLA | 100 |
| Example 22 | CS (1) | DAC (1) | 15,000 | 100 | 20 | 25 | 0.71 | 0.05 | PLA | 100 |
| Example 23 | CS (1) | DAC (1) | 15,000 | 100 | 20 | 25 | 0.71 | 10 | PLA | 100 |
| Example 24 | CS (1) | DAC (1) | 15,000 | 100 | 20 | 25 | 0.71 | 15 | PLA | 100 |
| Example 25 | CS (C1) | DAC (1) | 15,000 | 5 | 0.5 | 0 | 1.51 | 1 | PLA | 100 |
| Comparative Example 1 | - | - | - | - | - | - | - | 0 | PLA | 100 |
| Comparative Example 2 | CS (C2) | DAC (1) | 15,000 | 100 | 0.8 | 5 | 1.45 | 1 | PLA | 100 |
| Comparative Example 3 | CNF (1) | CNF | 100,000 | 0.01 | 170 | 55 | 0.53 | 1 | PLA | 100 |

**[Table 1-2]**

| | Kneading conditions | | Molding conditions | | | Dispersion diameter (µm) | Biodegradation rate (%) | HDT (°C) |
|---|---|---|---|---|---|---|---|---|
| | Cylinder temperature (°C) | Kneading torque (N·m) | Cylinder temperature (°C) | Mold temperature (°C) | Mold holding time (min) | | | |
| Example 1 | 180 | 2,800 | 180 | 40 | 2 | 2 | 72 | 155 |
| Example 2 | 180 | 2,600 | 180 | 40 | 2 | 1 | 71 | 151 |
| Example 3 | 180 | 2,700 | 180 | 40 | 2 | 3 | 68 | 150 |
| Example 4 | 180 | 2,900 | 180 | 40 | 2 | 0.5 | 73 | 152 |
| Example 5 | 180 | 2,900 | 180 | 40 | 2 | 1 | 57 | 141 |
| Example 6 | 180 | 2,600 | 180 | 40 | 2 | 5 | 67 | 147 |
| Example 7 | 180 | 2,900 | 180 | 40 | 2 | 35 | 35 | 127 |
| Example 8 | 180 | 2,900 | 180 | 40 | 2 | 10 | 57 | 142 |
| Example 9 | 180 | 1,600 | 180 | 40 | 2 | 12 | 58 | 143 |
| Example 10 | 180 | 1,700 | 180 | 40 | 2 | 5 | 56 | 141 |
| Example 11 | 180 | 2,600 | 180 | 40 | 2 | 48 | 38 | 126 |
| Example 12 | 170 | 1,500 | 170 | 30 | 4 | 10 | 55 | 140 |
| Example 13 | 160 | 1,400 | 160 | 30 | 4 | 11 | 57 | 141 |
| Example 14 | 240 | 1,600 | 240 | 40 | 1 | 8 | 56 | 141 |
| Example 15 | 180 | 2,500 | 180 | 40 | 2 | 48 | 42 | 140 |
| Example 16 | 180 | 2,600 | 180 | 40 | 2 | 50 | 53 | 144 |
| Example 17 | 180 | 2,600 | 180 | 40 | 2 | 45 | 38 | 133 |
| Example 18 | 180 | 2,600 | 180 | 40 | 2 | 1 | 58 | 140 |
| Example 19 | 180 | 2,600 | 180 | 40 | 2 | 0.5 | 73 | 132 |
| Example 20 | 180 | 2,200 | 180 | 40 | 2 | 50 | 32 | 146 |
| Example 21 | 180 | 2,600 | 180 | 40 | 2 | 4 | 30 | 138 |
| Example 22 | 180 | 2,600 | 180 | 40 | 2 | 2 | 13 | 119 |
| Example 23 | 180 | 2,900 | 180 | 40 | 2 | 5 | 76 | 152 |
| Example 24 | 180 | 2,900 | 180 | 40 | 2 | 7 | 82 | 143 |
| Example 25 | 180 | 2,700 | 180 | 110 | 2 | 5 | 31 | 131 |
| Comparative Example 1 | 180 | 2,600 | 180 | 110 | 2 | - | 9 | 56 |
| Comparative Example 2 | 180 | 2,800 | 180 | 110 | 2 | 80 | 9 | 70 |
| Comparative Example 3 | 180 | 2,700 | 180 | 110 | 2 | 65 | 25 | 134 |

From the results, it can be seen that in the present Examples, a resin molded body (that is, a resin composition) having high biodegradability and heat resistance can be obtained, as compared with Comparative Examples.

Furthermore, in Example 1, even in a case where the biodegradable resin is replaced with "poly(3-hydroxybutyrate-co-3-hydroxypentanoate)" or "poly(3-hydroxybutyrate-co-3-hydroxyhexanoate)", the same results as in Example 1 are obtained, showing that the biodegradability and the heat resistance are high.

The present exemplary embodiment includes the following aspects.
(((1))) According to a first aspect of the present disclosure, there is provided a resin composition comprising:
   a biodegradable resin; and
   a cellulose structure including at least one of a cellulose or a cellulose derivative as a main component,
   wherein the cellulose structure is present with an average diameter of 50 µm or less in the biodegradable resin.
(((2))) The resin composition according to (((1))),
   wherein the cellulose structure is a porous cellulose structure.
(((3))) The resin composition according to (((1))) or (((2))),
   wherein a number-average molecular weight of the cellulose and the cellulose derivative is 15,000 or more and 50,000 or less.
(((4))) The resin composition according to any one of (((1))) to (((3))),
   wherein the cellulose derivative is cellulose acetate.
(((5))) The resin composition according to any one of (((1))) to (((4))),
   wherein a content of the cellulose structure with respect to the biodegradable resin is 0.1% by mass or more and 10% by mass or less.
(((6))) The resin composition according to any one of (((1))) to (((5))),
   wherein a heat deflection temperature (HDT) is 140°C or higher.
(((7))) The resin composition according to any one of (((1))) to (((6))),
   wherein a biodegradation rate measured by a method according to ISO 14855-1: 2012 is 30% or more in 28 days.
(((8))) The resin composition according to any one of (((1))) to (((7))),
   wherein the biodegradable resin is at least one selected from the group consisting of polylactic acid, polybutylene succinate, polybutylene succinate adipate, cellulose acetate, and cellulose acetate propionate.

The effects of the aspects are as follows.

According to (((1))), (((6))), (((7))), or (((8))), there is provided a resin composition including a biodegradable resin and a cellulose structure including at least one of a cellulose or a cellulose derivative as a main component, in which the resin composition makes it possible to obtain a resin molded body having excellent biodegradability and heat resistance, as compared with a case where the cellulose structure is present with an average diameter of more than 50 µm in the biodegradable resin.

According to (((2))), there is provided a resin composition, which makes it possible to obtain a resin molded body having excellent biodegradability and heat resistance, as compared with a case where the cellulose structure is a non-porous cellulose structure.

According to (((3))), there is provided a resin composition, which makes it possible to obtain a resin molded body having excellent biodegradability and heat resistance, as compared with a case where the cellulose and the cellulose derivative have a number-average molecular weight of less than 15,000 or more than 50,000.

According to (((4))), there is provided a resin composition, which makes it possible to obtain a resin molded body having excellent biodegradability and heat resistance, as compared with a case where the cellulose derivative is cellulose acetate propionate.

According to (((5))), there is provided the resin composition, which makes it possible to obtain a resin molded body having excellent biodegradability and heat resistance, as compared with a case where a content of the cellulose structure with respect to the biodegradable resin is less than 0.1% by mass or more than 10% by mass.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. A resin composition comprising:
a biodegradable resin; and
a cellulose structure including at least one of a cellulose or a cellulose derivative as a main component,
wherein the cellulose structure is present with an average diameter of 50 µm or less in the biodegradable resin.

2. The resin composition according to claim 1,
wherein the cellulose structure is a porous cellulose structure.

3. The resin composition according to claim 1 or 2,
wherein a number-average molecular weight of the cellulose and the cellulose derivative is 15,000 or more and 50,000 or less.

4. The resin composition according to any one of claims 1 to 3,
wherein the cellulose derivative is cellulose acetate.

5. The resin composition according to any one of claims 1 to 4,
wherein a content of the cellulose structure with respect to the biodegradable resin is 0.1% by mass or more and 10% by mass or less.

6. The resin composition according to any one of claims 1 to 5,
wherein a heat deflection temperature (HDT) is 140°C or higher.

7. The resin composition according to any one of claims 1 to 6,
wherein a biodegradation rate measured by a method according to ISO 14855-1: 2012 is 30% or more in 28 days.

8. The resin composition according to any one of claims 1 to 7,
wherein the biodegradable resin is at least one selected from the group consisting of polylactic acid, polybutylene succinate, polybutylene succinate adipate, cellulose acetate, and cellulose acetate propionate.
